# EUROPÄISCHE PATENTSCHRIFT

(11) **EP 3 515 843 B1**
(45) Veröffentlichungstag und Bekanntmachung des Hinweises auf die Patenterteilung: **01.09.2021**
(21) Anmeldenummer: 17748464.9
(22) Anmeldetag: 02.08.2017
(51) Int. Cl.: F16J 13/06, F16J 13/18, F16J 13/24, F16K 37/00, F16L 55/115, F16K 1/20, F16K 17/02, F16K 17/04, B65D 90/34

(54) **VORRICHTUNG FÜR GESCHLOSSENE SYSTEME ZUM AUSGLEICH VON DRUCKSTÖSSEN**
DEVICE FOR CLOSED SYSTEMS FOR EQUALIZING PRESSURE SURGES
DISPOSITIF DE SYSTÈMES FERMÉS POUR LA COMPENSATION DE COUPS DE BÉLIER

(30) Priorität: 21.09.2016 DE 102016117833
(43) Veröffentlichungstag der Anmeldung: 31.07.2019
(73) Patentinhaber: Thorwesten Vent GmbH, 59269 Beckum NRW (DE)
(72) Erfinder: THORWESTEN, jun., Albert, 59069 Hamm NRW (DE)
(74) Vertreter: Meinke, Jochen
(86) Internationale Anmeldenummer: PCT/EP2017/069536
(87) Internationale Veröffentlichungsnummer: WO 2018/054587

(56) Entgegenhaltungen:
- EP-A1- 1 873 085
- DE-U1- 9 404 593
- DE-U1-202006 018 244
- US-A1- 2013 264 341

## Beschreibung

Die Erfindung betrifft eine Vorrichtung für geschlossene Systeme zum Ausgleich von Druckstößen mit einem Auslassstutzen, an dem eine Prallplatte vorgesehen und ein Klappdeckel schwenkbar gelagert ist, wobei der Klappdeckel in einer Ruhestellung auf dem Auslassstutzen bzw. auf der Zarge aufliegt und in einer Öffnungsstellung an der Prallplatte anliegt, wobei wenigstens eine Zuhaltevorrichtung vorgesehen ist, die den Klappdeckel in der Ruhestellung an den Auslassstutzen drückt und im Falle eines Druckstoßes den Klappdeckel freigibt.

Derartige Vorrichtungen bzw. Explosionsklappen werden in geschlossenen Systemen, wie Silos, Rohrleitungen, Biogasanlagen oder dergleichen, eingesetzt, um im Falle von Druckstößen durch mögliche Staub- oder Gasexplosionen einen Druckausgleich zu schaffen. Hierdurch lassen sich eine Zerstörung des geschlossenen Systems sowie weitere Sach- und Personenschäden vermeiden.

Eine solche Vorrichtung ist aus DE 36 26 946 A1 bekannt, wobei die Zuhaltevorrichtung als federgetriebenes Verschlusselement ausgebildet ist, welches den Klappdeckel in der Ruhestellung an den Auslassstutzen drückt und im Explosionsfall freigibt. Im Falle einer Explosion muss der Klappdeckel die Rückstellkraft der Feder des Verschlusselementes überwinden, um eine Schwenkbewegung auszuführen und einen Druckausgleich zu ermöglichen. Nach dem Aufprall des Klappdeckels gegen die Prallplatte fällt dieser wieder zu und muss die Rückstellkraft der Feder des Verschlusselementes ein weiteres Mal überwinden, um den Auslassstutzen wieder luftdicht zu verschließen. Eine weitere Vorrichtung dieser Art ist aus DE 94 04 593 U1 bekannt.

Es hat sich als sehr vorteilhaft erwiesen, das Gewicht des Klappdeckels zu verringern, um die Trägheit des Klappdeckels zu reduzieren und einen Druckausgleich im Falle einer Explosion mit minimaler Verzögerung herbeizuführen. In den letzten Jahren haben sich daher Klappdeckel durchgesetzt, die aus einem Kohle- und Glasfasermaterial bestehen und bei einem geringen Eigengewicht eine hohe Festigkeit aufweisen. Ein solcher Klappdeckel ist zum Beispiel aus EP 2 084 088 B1 bekannt.

Das Eigengewicht solcher Klappdeckel in der Leichtbauweise reicht nicht aus, um die Rückstellkraft einer Feder eines Verschlusselementes gemäß DE 36 26 946 A1 zu überwinden und das geschlossene System wieder luftdicht abzuschließen. Nachteilig hieran ist, dass zum Beispiel Verschmutzungen oder Feuchtigkeit in das System eindringen und zu einer Zerstörung der Schüttgüter führen können. Besonders nachteilig ist jedoch, dass nach einer Explosion im geschlossenen System sich ein Feuer entfachen kann, welches durch die nicht luftdicht abgeschlossene Vorrichtung weiter mit Sauerstoff versorgt wird und zu einer Zerstörung des Systems führt.

Aus US 2013/264341 A1 ist eine Einstiegsluke für Tanks bekannt, die einen verschwenkbar angelenkten Deckel aufweist, wobei der Deckel auf der der Schwenkachse gegenüberliegenden Seite mit einem als Zuhalteeinrichtung dienenden Schwenkhebel verbunden ist. Dieser Schwenkhebel kann manuell geöffnet werden, um den Deckel öffnen zu können. Tritt im System ein Überdruck auf, ist der Schwenkbolzen des Schwenkhebels so ausgelegt, dass er durch Abscheren od. dgl. zerstört wird, so dass der Deckel zum Abbau des Überdruckes selbsttätig öffnen kann. Dadurch ist die Zuhalteeinrichtung zerstört und die Einstiegsluke unbrauchbar und muss anschließend in Stand gesetzt werden.

Aus EP 1 873 085 A1 ist eine weitere Explosionsschutzklappe zum Ausgleich von Druckunterschieden in geschlossenen, explosionsgefährdeten Anlagen mit einer federbelasteten Zuhaltevorrichtung bekannt.

Aufgabe der Erfindung ist es daher, eine Vorrichtung der eingangs bezeichneten Art anzugeben, bei der der Klappdeckel in Leichtbauweise beim Aufliegen auf dem Auslassstutzen das System luftdicht abschließt.

Diese Aufgabe wird bei einer Vorrichtung der eingangs bezeichneten Art erfindungsgemäß mit den Merkmalen des Patentanspruches 1 gelöst.

Es wird somit eine Vorrichtung für geschlossene Systeme zum Ausgleich von Druckstößen zur Verfügung gestellt, die eine pneumatische oder elektropneumatische Steuereinheit unter Verwendung elektronischer Schaltungen aufweist, die die Zuhaltevorrichtung steuert, welche pneumatisch verstellbar ist. Hierbei ist die Steuerung bzw. Regelung so ausgelegt, dass im Falle einer Explosion die Zuhaltevorrichtung den Klappdeckel freigibt und dieser aus der Ruhestellung in die Öffnungsstellung schwenken kann und dabei seine kinetische Energie durch den Aufprall auf die Prallplatte abgibt. Anschließend fällt der Klappdeckel in die Ruhestellung, wobei die Zuhaltevorrichtung in diesem Moment immer noch geöffnet ist, d.h. der Raum zwischen dem Klappdeckel und dem Auslassstutzen ist frei, so dass der Klappdeckel auf dem Auslassstutzen aufliegen kann. Nachdem der Klappdeckel auf dem Auslassstutzen aufliegt, drückt die Zuhaltevorrichtung aufgrund eines Signals der Steuereinheit auf den sich in der Ruhestellung befindenden Klappdeckel und schließt somit das System luftdicht ab.

Ein weiterer Vorteil ist, dass der Druck, den die Zuhaltevorrichtung auf den Klappdeckel ausübt, variabel einstellbar ist und somit an die Anforderungen vor Ort in einfachster Weise angepasst werden kann. Ferner ist auch der Ansprechdruck, d.h. der Druck, den der Klappdeckel auf die Zuhaltevorrichtung ausüben muss, um eine Freigabe des Raumes zwischen dem Klappdeckel und dem Auslassstutzen zu erwirken, variabel einstellbar.

Ferner ist wenigstens ein Sensor, z.B. ein Rollentaster, vorgesehen, der die Stellung des Klappdeckels erfasst und an die Steuereinheit übermittelt. Ein solcher Sensor kann mechanische, piezoelektrische, kapazitive, induktive, optische, resistive oder magnetische Effekte zur Messung der Stellung des Klappdeckels nutzen. So kann der Sensor zum Beispiel auch ein Rollentaster sein. Dabei ist unter der Stellung des Klappdeckels jede Position zwischen der Ruhestellung oder Öffnungsstellung zu verstehen, in die der Klappdeckel geschwenkt werden kann. Hierbei ist besonders wichtig, dass der Sensor feststellt, ob der Klappdeckel in der Ruhestellung ist. Vorteilhaft an einem solchen Sensor ist, dass die Steuereinheit bzw. die Zuhaltevorrichtung nicht nur zeitgesteuert, sondern auch ereignisbasiert reagieren kann.

Dadurch, dass die Zuhaltevorrichtung pneumatisch verstellbar ist, werden besonders hohe Arbeitsgeschwindigkeiten erreicht und die Zeit, die vergeht, bis die Zuhaltevorrichtung den Klappdeckel freigibt, wird auf ein Minimum reduziert. Im Vergleich zu einer elektrischen Zuhaltevorrichtung ist eine pneumatische Zuhaltevorrichtung in der Konstruktion einfacher und weist ein geringeres Eigengewicht auf. Ein weiterer Vorteil der pneumatischen Zuhaltevorrichtung ist, dass an dem Auslassstutzen, aus dem möglicherweise noch ein explosives Luftgasgemisch entweichen kann, dieses nicht durch die Abwärme der Zuhaltevorrichtung entzündet wird, da bei pneumatischen Systemen die Abwärme hauptsächlich am Kompressor selbst entsteht. Gegenüber hydraulischen Systemen besteht der Vorteil, dass keine Rückleitungen benötigt werden, da die entstehende Abluft direkt in die Umgebung entweichen kann und somit die Arbeitsgeschwindigkeit der Zuhaltevorrichtung erhöht wird.

Die Steuereinheit selbst ist pneumatisch oder auch elektropneumatisch unter Verwendung elektronischer Schaltungen, wie speicherprogrammierbare Steuerungen, ausgebildet.

Weiterhin ist ein Druckluftspeicher als Energiespeicher oder -puffer vorgesehen, der die Zuhaltevorrichtung bei Stromausfall mit Druckluft versorgt. Der Druckluftspeicher ist mit einer Druckluftversorgung verbunden und speichert Druckluft für die Zuhaltevorrichtung. Im Falle eines Ausfalls der Druckluftversorgung dient der Druckluftspeicher als Notspeicher, der eine einwandfreie Funktion der Zuhaltevorrichtung gewährleistet. Der Druckluftspeicher selbst ist mit einem Druckschalter ausgestattet, der fernwartungstechnisch in einem Leitstand auslesbar ist und der Überprüfung des am Druckluftspeicher anliegenden Druckes dient.

Eine weitere Ausgestaltung sieht vor, dass die Zuhaltevorrichtung einen Pneumatikzylinder mit einem verfahrbaren Kolben aufweist. Pneumatikzylinder sind übliche Standardbauteile und lassen sich kostengünstig und einfach herstellen, wobei sie den weiteren Vorteil aufweisen, dass durch die Änderung des anliegenden Luftdrucks auch der Druck der Zuhaltevorrichtung auf den Klappdeckel gesteuert bzw. geregelt werden kann.

Es ist bevorzugt, dass der Pneumatikzylinder mit einem Ende in einem Gehäuse der Zuhaltevorrichtung um eine Achse schwenkbar gelagert ist. Die schwenkbare Lagerung des Pneumatikzylinders ermöglicht eine Verbesserung der Arbeitsgeschwindigkeit bzw. Reaktionszeit der Zuhaltevorrichtung. Dabei wird der Zylinder inklusive des Kolbens durch Entlüftung des Kolbeninnenraums im Falle einer Explosion vollständig aus dem Bewegungsbereich des Klappdeckels geschwenkt.

In einer weiteren besonderen Ausgestaltung ist vorgesehen, dass am freien Ende des Kolbens ein Verriegelungshebel schwenkbar ausgelenkt ist und diese zusammen ein Gelenk bilden. Der schwenkbar gelagerte Verriegelungshebel bietet den Vorteil, dass die Kraft des Kolbens optimal auf den Klappdeckel übertragen wird.

Weiterhin ist besonders bevorzugt vorgesehen, dass ein Ende des Verriegelungshebels um eine Hebelachse schwenkbar gelagert ist, wobei die Hebelachse im Gehäuse gelagert ist. Dies hat den Vorteil, dass der Verriegelungshebel nach einer Explosion nicht zufällig in den Raum zwischen dem Klappdeckel und dem Auslassstutzen gelangt und folglich ein luftdichtes Abschließen des Systems verhindert.

Eine weitere besondere Ausgestaltung sieht vor, dass der Verriegelungshebel eine Ausnehmung zum Übergang des Randes des Klappdeckels aufweist, so dass die Kraft des Kolbens parallel zur Erstreckung der Symmetrieachse des Auslassstutzens wirkt und dadurch bei einer gegebenen Kraft des Kolbens eine optimale Pressung des Klappdeckels an den Auslassstutzen erfolgt.

Ferner ist besonders bevorzugt, dass die Zuhaltevorrichtung einen Schnellentlüfter aufweist. Hierdurch kann eine Verbesserung der Arbeitsgeschwindigkeit bzw. Reaktionszeit der Zuhaltevorrichtung erzielt werden, da im Falle einer Explosion der Kolbeninnenraum sehr schnell entlüftet werden kann, um den Verriegelungshebel zurückzufahren, so dass der Klappdeckel gegen die Prallplatte schlagen kann.

Eine besonders bevorzugte Ausgestaltung sieht vor, dass die Steuereinheit die Zuhaltevorrichtung so steuert, dass diese nach einem Druckstoß erst nach einem vordefinierten Zeitintervall den Klappdeckel auf den Auslassstutzen drückt. Es ist möglich, dass bei einer Staub- oder Gasexplosion mehrere nacheinander folgende Explosionen stattfinden und der Klappdeckel erst wieder auf den Auslassstutzen gedrückt werden soll, wenn sich im System ein Gleichgewichtszustand eingestellt hat. Das Zeitintervall kann dabei einfach über die Steuereinheit festgelegt werden.

Weitere Merkmale, Einzelheiten und Vorteile der Erfindung ergeben sich aufgrund der nachfolgenden Beschreibung sowie anhand der Zeichnungen. Einander entsprechende Gegenstände oder Elemente sind in allen Figuren mit dem gleichen Bezugszeichen versehen. Es zeigt
- Fig. 1: eine perspektivische Ansicht einer erfindungsgemäßen Vorrichtung,
- Fig. 2: eine perspektivische Ansicht des pneumatischen Aufbaus der Vorrichtung aus Fig. 1,
- Fig. 3: eine Querschnittsdarstellung einer erfindungsgemäßen Vorrichtung, wobei der Klappdeckel in der Ruhestellung ist,
- Fig. 4: eine Querschnittsdarstellung einer erfindungsgemäßen Zuhaltevorrichtung, wobei der Klappdeckel in der Ruhestellung ist,

- Fig. 5: eine Querschnittsdarstellung einer erfindungsgemäßen Vorrichtung, wobei der Klappdeckel in der Öffnungsstellung ist,
- Fig. 6: eine Querschnittsdarstellung einer erfindungsgemäßen Zuhaltevorrichtung, wobei der Klappdeckel in der Öffnungsstellung ist.

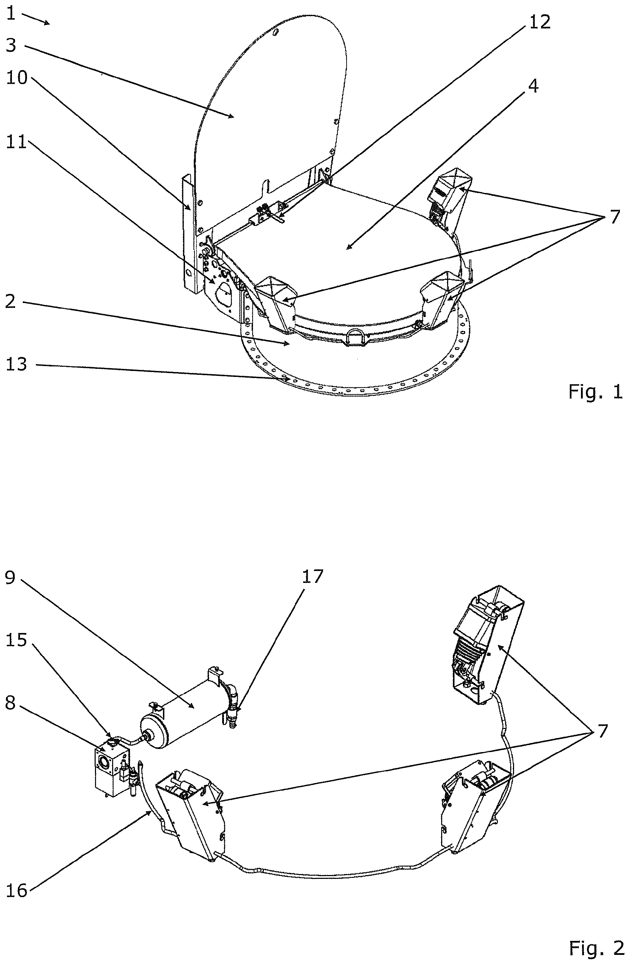

In Fig. 1 ist eine perspektivische Ansicht einer erfindungsgemäßen Vorrichtung 1 dargestellt, die einen Auslassstutzen 2 aufweist, der vorzugsweise als zylindrisches Rohr ausgebildet ist, wobei an einem Ende des Auslassstutzens 2 ein Flansch 13 vorgesehen ist, der als eine umlaufende ringförmige Verbreiterung des Auslassstutzens 2 ausgebildet ist und eine Vielzahl von Bohrungen aufweist. Die Vorrichtung 1 wird mit dem Flansch 13 an einer Aussparung eines nicht dargestellten Systems, zum Beispiel einem Behälter oder einem Silo, lösbar angebracht. Hierbei weist die Aussparung einen Durchmesser auf, der nicht größer ist als der Durchmesser des Auslassstutzens 2.

An dem Ende des Auslassstutzens 2, welches dem Flansch 13 gegenüberliegt, ist ein schwenkbarer Klappdeckel 4, eine Prallplatte 3 und wenigstens eine Zuhaltevorrichtung 7 vorgesehen. In dieser Ausführungsform sind beispielhaft drei Zuhaltevorrichtungen 7 vorgesehen, wobei die Anzahl der Zuhaltevorrichtungen 7 vom Durchmesser des Auslassstutzens 2 abhängt.

Quer zu einer Längserstreckung bzw. Symmetrieachse 14 sind am Auslassstutzen 2 außenseitig zwei Rahmenelemente 11 voneinander beabstandet angeordnet, an denen jeweils ein Profil 10 lösbar angebracht ist, welches im Wesentlichen parallel zur Längserstreckung bzw. Symmetrieachse 14 des Auslassstutzens 2 ausgerichtet ist. An den Profilen 10 ist die Prallplatte 3 lösbar angeordnet und somit über die Rahmenelemente 11 starr mit dem Auslassstutzen 2 verbunden.

Der Klappdeckel 4 ist in den Profilen 10 schwenkbar gelagert und in dieser Darstellung in einer Ruhestellung 5. In dieser Ruhestellung 5 liegt der Klappdeckel 4 auf dem Ende des Auslassstutzens 2 auf, das dem Flansch 13 gegenüberliegt, und wird durch die Zuhaltevorrichtungen 7 an den Auslassstutzen 2 gedrückt, um das nicht dargestellte System luftdicht abzuschließen. Im Falle einer Explosion im nicht dargestellten System wird der Klappdeckel 4 durch den entstehenden Druckstoß aufgeschlagen, wobei die Zuhaltevorrichtungen 7 den Klappdeckel 4 freigeben und dieser um eine Schwenkachse 19 in eine Öffnungsstellung 6 schwenken kann und dabei auf die Prallplatte 3 aufschlägt. Hierdurch wird die kinetische Energie des Klappdeckels 4 auf die Prallplatte 3 übertragen und somit eine Zerstörung des Klappdeckels 4 verhindert.

Es kann der Fall eintreten, dass der Klappdeckel 4 seine kinetische Energie vollständig an die Prallplatte 3 abgibt und in nicht erwünschter Weise in der Öffnungsstellung 6 verharrt. Um dies zu verhindern, ist um die Schwenkachse 19 des Klappdeckels 4 eine Rückstellfeder 12 angeordnet, die in einem solchen Fall den Klappdeckel 4 in Richtung des Auslassstutzens 2 bewegt. Die Rückstellfeder 12 ist auch in Einbausituationen vorteilhaft, in denen die Vorrichtung 1 in einer zum Horizont geneigten Position installiert ist.

In Fig. 2 ist eine perspektivische Ansicht des pneumatischen Aufbaus der Vorrichtung aus Fig. 1 gezeigt. Dieser pneumatische Aufbau weist einen Druckluftspeicher 9 als Energiespeicher oder -puffer, eine Steuereinheit 8 und wenigstens eine Zuhaltevorrichtung 7 auf, die mit Leitungen 16 verbunden sind. Über die Leitungen 16 wird die Steuereinheit 8 sowie die Zuhaltevorrichtung 7 mit Druckluft versorgt. An dem Druckluftspeicher 9 ist ein Druckluftanschluss 17 angeordnet, der mit einem nicht dargestellten Druckluftsystem verbunden ist. Ferner ist ein Sensor 15, der in dieser Ausführungsform als Rollentaster ausgebildet ist, mit der Steuereinheit 8 verbunden und übermittelt die Stellung des Klappdeckels 4 an die Steuereinheit 8.

Das aktive Verriegeln des Klappdeckels 4 steuert bzw. regelt die Steuereinheit 8, die vorzugsweise pneumatisch ausgebildet ist. Fällt der Klappdeckel 4 nach einer Explosion wieder in seine Ruhestellung 5, wird der Sensor 15 betätigt und übermittelt ein Signal an die Steuereinheit 8, wodurch die Zuhaltevorrichtung 7 zeitverzögert mit Druckluft, die über die Leitungen 16 transportiert wird, beaufschlagt wird und den Klappdeckel 4 aktiv auf den Auslassstutzen 2 drücken und somit das System luftdicht abschließt. Dabei kann die Zeitverzögerung auf einen beliebigen Wert eingestellt werden und wird durch ein nicht dargestelltes Zeitventil gesteuert. Ferner weist die Steuereinheit 8 die folgenden nicht dargestellten Komponenten auf: Ein Entlüftungsventil, einen Druckregler, einen Druckmessformer (4-20 mA) und ein Sicherheitsventil zur Begrenzung des Maximaldruckes.

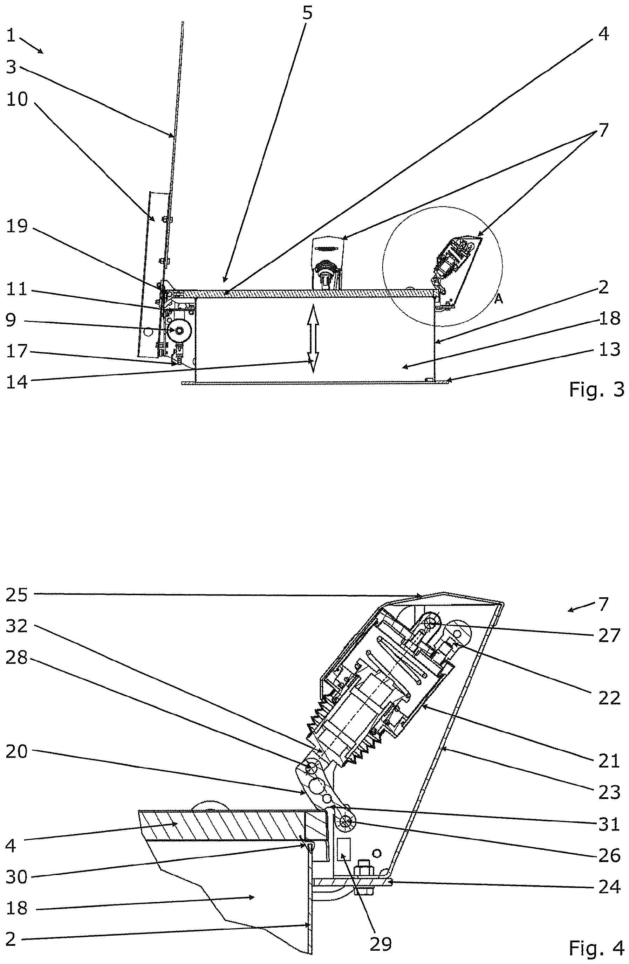

In Fig. 3 ist eine Querschnittsdarstellung einer erfindungsgemäßen Vorrichtung gezeigt, wobei der Klappdeckel in der Ruhestellung 5 ist.

In Fig. 4 ist der Ausschnitt A aus Fig. 3 vergrößert dargestellt und zeigt eine Querschnittsdarstellung einer erfindungsgemäßen Zuhaltevorrichtung in einer Sperrstellung. Der Auslassstutzen 2 begrenzt ein Innenvolumen 18, welches in dem Ausführungsbeispiel frei ist, wobei aber auch denkbar ist, dass in dem Innenvolumen 18 ein Flammsperrkörper eingebracht ist, der zum Beispiel aus einer wabenförmigen Struktur gebildet ist. Die Symmetrieachse 14 erstreckt sich im Wesentlichen parallel zur axialen Richtung des Auslassstutzens 2.

Die Zuhaltevorrichtung 7 weist ein Gehäuse 23 auf, welches durch ein Verbindungsprofil 24 mit dem Auslassstutzen 2 verbunden ist und eine Wetterschutzhaube 25 aufweist. Innerhalb des Gehäuses 23 ist ein Pneumatikzylinder 21 angeordnet, der um eine Achse 27 schwenkbar gelagert ist. Der Pneumatikzylinder 21 weist einen Kolben 32 auf, der eine translatorische Bewegung von dem Pneumatikzylinder 21 weg ausführt, sobald die Zuhaltevorrichtung 7 und folglich auch der Pneumatikzylinder 21 mit Druckluft beaufschlagt wird. Hierfür ist der Pneumatikzylinder 21 mit nicht dargestellten Leitungen mit dem Druckluftspeicher 9 und/oder mit der Steuereinheit 8 verbunden. Wird die Beaufschlagung des Pneumatikzylinders 21 mit Druckluft aufgehoben, sorgt eine Rückstellfeder innerhalb des Pneumatikzylinders 21 dafür, dass der Kolben 32 in das Innere des Pneumatikzylinders 21 gezogen wird.

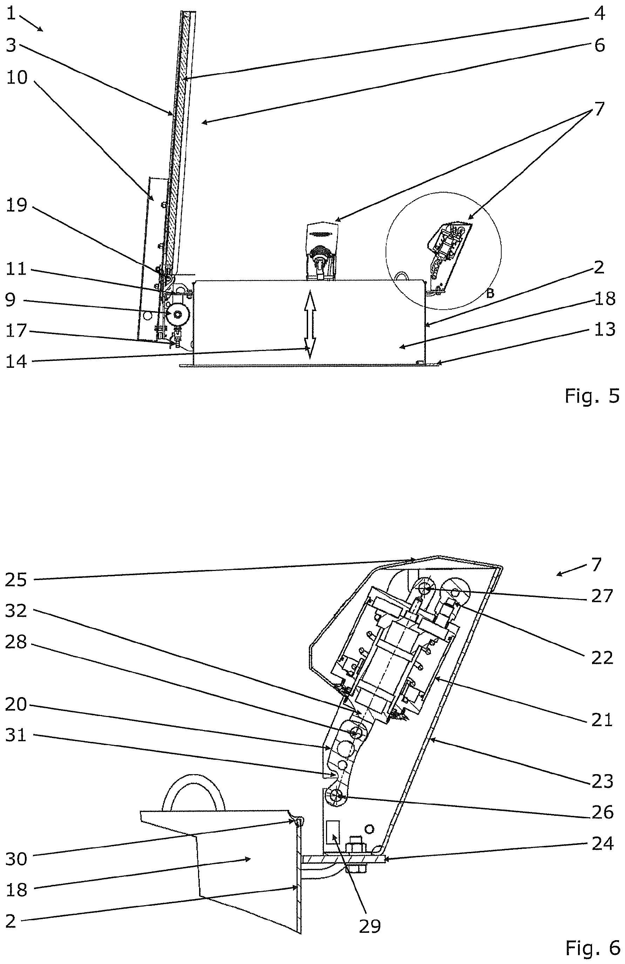

An dem freien Ende des Kolbens 32, d.h. an dem Ende, welches nicht im Pneumatikzylinder 21 eingeschlossen ist, ist ein Ende eines Verriegelungshebels 20 schwenkbar gelagert und bildet zusammen mit dem Kolben 32 ein Gelenk 28 aus. Ein anderes Ende des Verriegelungshebels 20 ist um die Hebelachse 26 schwenkbar gelagert. Die Achse 27 und die Hebelachse 26 werden durch Rundprofile gebildet, die sich in den Fig. 4 und 6 im Wesentlichen parallel zur Flächennormalen der Zeichnungsebene erstrecken. Diese Rundprofile sind lösbar mit dem Gehäuse 23 verbunden und ermöglichen lediglich eine Rotation des Pneumatikzylinders 21 bzw. des Verriegelungshebels 20 um die jeweilige Achse. Eine Kombination einer Rotations- und Translationsbewegung ist durch die Randbedingungen nur durch eine translatorische Bewegung des Kolbens 32 möglich.

Der Verriegelungshebel 20 weist eine Ausnehmung 31 zum Übergang des Randes des Klappdeckels 4 auf und ermöglicht somit, dass die Kraft, die auf den Klappdeckel 4 wirkt, im Wesentlichen parallel zur Symmetrieachse 14 verläuft. Hierdurch wird die Dichtung 30 zwischen dem Auslassstutzen 2 und dem Klappdeckel 4 elastisch so verformt, dass das nicht dargestellte System mit der Vorrichtung luftdicht abgeschlossen ist.

Der Klappdeckel 4 wird bis zum Erreichen eines eingestellten statischen Ansprechdruckes, der mit der Steuereinheit 8 variabel verstellbar ist, durch den aufliegenden Verriegelungshebel in der Ruhestellung 5 gehalten. Überschreitet der Druck im System den Ansprechdruck, wird der Pneumatikzylinder 21 schlagartig über einen Schnellentlüfter 22 entlüftet, so dass der Kolben 23 durch die im Pneumatikzylinder 21 eingebaute Rückstellfeder in den Pneumatikzylinder 21 gezogen wird, wobei hierdurch der Verriegelungshebel 20 aus einer Sperrstellung in eine Freistellung übergeht und den Klappdeckels 4 freigibt, damit dieser gegen die Prallplatte 3 schwenken kann.

In Fig. 5 ist eine Querschnittsdarstellung einer erfindungsgemäßen Vorrichtung gezeigt, wobei der Klappdeckel in der Öffnungsstellung 6 ist. In Fig. 6 ist der Ausschnitt B aus Fig. 5 vergrößert dargestellt und zeigt eine Querschnittsdarstellung einer erfindungsgemäßen Zuhaltevorrichtung in einer Freistellung. Die Stellung des Klappdeckels 4 kann in einem Leitstand fernwartungstechnisch mit einem zusätzlichen Sensor 29 ermittelt werden, der bevorzugt unterhalb des Verriegelungshebels 20 angeordnet ist.

Natürlich ist die Erfindung nicht auf die dargestellten Ausführungsbeispiele beschränkt. Weitere Ausgestaltungen sind möglich, ohne den Grundgedanken zu verlassen. So kann die Vorrichtung auch mit Unterdruckklappen ausgestattet sein, um eine Implosion des Systems zu verhindern. Ferner kann es sinnvoll sein, dass der Klappdeckel mit Temperatursensoren und einer elektrischen Heizung ausgestattet ist. Vorteilhaft hieran ist, dass der Klappdeckel von Schneelasten und Eisbildung freigehalten werden kann. Da die Steuereinheit und die Zuhaltevorrichtung vollständig pneumatisch ausgebildet sind und auch ein Druckluftspeicher als Energiespeicher oder -puffer vorgesehen ist, ist im Falle eines Stromausfalles immer noch die ordnungsgemäße Funktionsweise der erfindungsgemäßen Vorrichtung gewährleistet, da diese unabhängig von der Spannungsversorgung ist. Weiter ist zu beachten, dass unter Zudrücken immer ein aktives Zudrücken gemeint ist.

Bezuaszeichenliste:
- 1: Vorrichtung
- 2: Auslassstutzen
- 3: Prallplatte
- 4: Klappdeckel
- 5: Ruhestellung
- 6: Öffnungsstellung
- 7: Zuhaltevorrichtung
- 8: Steuereinheit
- 9: Druckluftspeicher
- 10: Profil
- 11: Rahmenelement
- 12: Rückstellfeder
- 13: Flansch
- 14: Symmetrieachse
- 15: Rollentaster
- 16: Leitung
- 17: Druckluftanschluss
- 18: Innenvolumen
- 19: Schwenkachse
- 20: Verriegelungshebel
- 21: Pneumatikzylinder
- 22: Schnellentlüfter
- 23: Gehäuse
- 24: Verbindungsprofil
- 25: Wetterschutzhaube
- 26: Hebelachse
- 27: Achse
- 28: Gelenk
- 29: Sensor
- 30: Dichtung
- 31: Ausnehmung
- 32: Kolben

## Patentansprüche

1. Vorrichtung (1) für geschlossene Systeme zum Ausgleich von Druckstößen mit einem Auslassstutzen (2), an dem eine Prallplatte (3) vorgesehen und ein Klappdeckel (4) schwenkbar gelagert ist, wobei der Klappdeckel (4) in einer Ruhestellung (5) auf dem Auslassstutzen (2) aufliegt und in einer Öffnungsstellung (6) an der Prallplatte (3) anliegt, wobei wenigstens eine Zuhaltevorrichtung (7) vorgesehen ist, die den Klappdeckel (4) in der Ruhestellung (5) an den Auslassstutzen (2) drückt und im Falle eines Druckstoßes den Klappdeckel (4) freigibt,
**dadurch gekennzeichnet,**
**dass** die Vorrichtung eine pneumatische oder elektropneumatische Steuereinheit (8) unter Verwendung elektronischer Schaltungen aufweist, die die Zuhaltevorrichtung (7) steuert, welche pneumatisch verstellbar ist, wobei wenigstens ein Sensor (15) vorgesehen ist, der die Stellung des Klappdeckels (4) erfasst und an die Steuereinheit (8) übermittelt, wobei nach der Erfassung der Ruhestellung des Klappdeckels (4) durch den Sensor (15) die Zuhaltevorrichtung (7) aufgrund eines Signals der Steuereinheit (8) auf den sich in der Ruhestellung befindenden Klappdeckel (4) drückt.

2. Vorrichtung nach Anspruch 1,
**dadurch gekennzeichnet,**
**dass** ein Druckluftspeicher (14) als Energiespeicher oder -puffer vorgesehen ist, der die Zuhaltevorrichtung (7) mit Druckluft versorgt.

3. Vorrichtung nach Anspruch 1 oder 2,
**dadurch gekennzeichnet,**
**dass** die Zuhaltevorrichtung (7) einen Pneumatikzylinder (21) mit einem verfahrbaren Kolben (32) aufweist.

4. Vorrichtung nach Anspruch 3,
**dadurch gekennzeichnet,**
**dass** der Pneumatikzylinder (21) mit einem Ende in einem Gehäuse (23) der Zuhaltevorrichtung (7) um eine Achse (27) schwenkbar gelagert ist.

5. Vorrichtung nach Anspruch 3 oder 4,
**dadurch gekennzeichnet,**
**dass** am freien Ende des Kolbens (32) ein Verriegelungshebel (20) schwenkbar ausgelenkt ist und diese zusammen ein Gelenk (28) bilden.

6. Vorrichtung nach Anspruch 5,
**dadurch gekennzeichnet,**
**dass** ein Ende des Verriegelungshebels (20) um eine Hebelachse (26) schwenkbar gelagert ist, wobei die Hebelachse (26) im Gehäuse (23) gelagert ist.

7. Vorrichtung nach Anspruch 5 oder 6,
**dadurch gekennzeichnet,**
**dass** der Verriegelungshebel (20) eine Ausnehmung (31) zum Übergang des Randes des Klappdeckels (4) aufweist.

8. Vorrichtung nach einem oder mehreren der Ansprüche 1 bis 7,
**dadurch gekennzeichnet,**
**dass** die Zuhaltevorrichtung (7) einen Schnellentlüfter (22) aufweist.

9. Vorrichtung nach einem oder mehreren der Ansprüche 1 bis 8,
**dadurch gekennzeichnet,**
**dass** die Steuereinheit (8) die Zuhaltevorrichtung (7) so steuert, dass die Zuhaltevorrichtung (7) nach einem Druckstoß erst nach einem vordefinierten Zeitintervall den Klappdeckel (4) auf den Auslassstutzen (2) drückt.

## Claims

1. Device (1) for closed systems for equalisation of pressure surges, comprising an outlet nozzle (2), on which an impact plate (3) is provided and a hinged cover (4) is pivotably mounted, wherein in a rest position (5) the hinged cover (4) lies on the outlet nozzle (2) and in an open position (6) bears on the impact plate (3), wherein at least one closure retention device (7) is provided, which in the rest position (5) presses the hinged cover (4) against the outlet nozzle (2) and in the event of a pressure surge releases the hinged cover (4),
**characterised in that**
the device has a pneumatic or electro-pneumatic control unit (8) using electronic circuits, which controls the closure retention device (7), which is pneumatically adjustable, wherein at least one sensor (15) is provided, which detects the position of the hinged cover (4) and communicates it to the control unit (8), wherein after the detection of the rest position of the hinged cover (4) by the sensor (15) the closure retention device (7), on the basis of a signal of the control unit (8), presses against the hinged cover (4) that is in the rest position .

2. Device according to claim 1,
**characterised in that**
a compressed-air accumulator (14) is provided as an energy store or buffer, which supplies the closure retention device (7) with compressed air.

3. Device according to claim 1 or 2,
**characterised in that**
the closure retention device (7) has a pneumatic cylinder (21) with a movable piston (32).

4. Device according to claim 3,
**characterised in that**
the pneumatic cylinder (21) is pivotably mounted around an axle (27) with one end in a housing (23) of the closure retention device (7).

5. Device according to claim 3 or 4,
**characterised in that**
a locking lever (20) is pivotably linked at the free end of the piston (32) and these together form an articulated joint (28).

6. Device according to claim 5,
**characterised in that**
one end of the locking lever (20) is pivotably mounted around a lever axle (26), wherein the lever axle (26) is mounted in the housing (23).

7. Device according to claim 5 or 6,
**characterised in that**
the locking lever (20) has a recess (31) to the transition of the rim of the hinged cover (4).

8. Device according to any one or more of claims 1 to 7,
**characterised in that**
the closure retention device (7) has a fast-acting vent (22).

9. Device according to any one or more of claims 1 to 8,
**characterised in that**
the control unit (8) controls the closure retention device (7) in such a way that the closure retention device (7) presses the hinged cover (4) onto the outlet nozzle (2) only after a predefined time interval following a pressure surge.

## Revendications

1. Dispositif (1) pour des systèmes fermés pour la compensation de coups de bélier avec une tubulure de sortie (2), au niveau de laquelle une plaque déflectrice (3) est prévue et un couvercle à charnière (4) est logé de manière pivotante, dans lequel le couvercle à charnière (4) se trouve dans une position de repos (5) sur la tubulure de sortie (2) et repose dans une position d'ouverture (6) contre la plaque déflectrice (3), dans lequel au moins un dispositif de retenue (7) est prévu, lequel presse le couvercle à charnière (4) dans la position de repos (5) contre la tubulure de sortie (2) et libère dans le cas d'un coup de bélier le couvercle à charnière (4),
**caractérisé en ce que**
le dispositif présente une unité de commande (8) pneumatique ou électropneumatique en utilisant des circuits électroniques qui commande le dispositif de retenue (7), lequel est réglable de manière pneumatique, dans lequel au moins un capteur (15) est prévu, lequel détecte la position du couvercle à charnière (4) et la transmet à l'unité de commande (8), dans lequel après la détection de la position de repos du couvercle à charnière (4) par le capteur (15) le dispositif de retenue (7) exerce une pression en raison d'un signal de l'unité de commande (8) sur le couvercle à charnière (4) se trouvant dans la position de repos.

2. Dispositif selon la revendication 1,
**caractérisé en ce qu'**
un accumulateur d'air comprimé (14) est prévu comme accumulateur ou tampon d'énergie qui alimente en air comprimé le dispositif de retenue (7).

3. Dispositif selon la revendication 1 ou 2,
**caractérisé en ce que**
le dispositif de retenue (7) présente un vérin pneumatique (21) avec un piston déplaçable (32).

4. Dispositif selon la revendication 3,
**caractérisé en ce que**
le vérin pneumatique (21) est logé de manière pivotante à une extrémité dans un boîtier (23) du dispositif de retenue (7) autour d'un axe (27).

5. Dispositif selon la revendication 3 ou 4,
**caractérisé en ce que**
un levier de verrouillage (20) est dévié de manière pivotante à l'extrémité libre du piston (32) et ceux-ci forment ensemble une articulation (28).

6. Dispositif selon la revendication 5,
**caractérisé en ce qu'**
une extrémité du levier de verrouillage (20) est logée de manière pivotante autour d'un axe de levier (26), dans lequel l'axe de levier (26) est logé dans le boîtier (23).

7. Dispositif selon la revendication 5 ou 6,
**caractérisé en ce que**
le levier de verrouillage (20) présente un évidement (31) pour la transition du bord du couvercle à charnière (4).

8. Dispositif selon l'une quelconque ou plusieurs des revendications 1 à 7,
**caractérisé en ce que**
le dispositif de retenue (7) présente un purgeur d'air rapide (22).

9. Dispositif selon l'une quelconque ou plusieurs des revendications 1 à 8,
**caractérisé en ce que**
l'unité de commande (8) commande le dispositif de retenue (7) de sorte que le dispositif de retenue (7) après un coup de bélier n'exerce une pression qu'après un intervalle de temps prédéfini le couvercle à charnière (4) sur la tubulure de sortie (2).
